# EUROPEAN PATENT APPLICATION

(11) **EP 2 074 885 A2**
(43) Date of publication of application: **01.07.2009**
(21) Application number: 08022137.7
(22) Date of filing: 19.12.2008
(51) Int. Cl.: A01K 89/01

(54) **Fishing spinning reel**

(30) Priority: 27.12.2007 JP 2007338317; 27.12.2007 JP 2007338320
(71) Applicant: DAIWA SEIKO INC., Higashikurume-shi, Tokyo (JP)
(72) Inventor: Murakami, Shinji, Higashikurume-shi Tokyo (JP); Shibata, Takashi, Higashikurume-shi Tokyo (JP)
(74) Representative: Grünecker, Kinkeldey, Stockmair & Schwanhäusser Anwaltssozietät

(57) **Abstract**

A fishing spinning reel (10) includes a bail support member (14c) having a line guide portion (14e) which is supported in such a manner as to rotate reversibly between a line winding position and a line releasing position on an arm portion (14b) of a rotor (14) linked with a handle (24) provided on a reel main body (12) in such a manner as to rotate as a result of the handle being operated to turn, and a switching lever (62) which can be switched between an anti-reverse state in which the rotor (14) is prevented from rotating backwards and a rotation enabling state in which the rotor (14) is enabled to rotate forwards and backwards. The bail support member (14c) is restricted from reversing from the line winding position to the line releasing position when the switching lever (62) is in the rotation enabling state.

## Description

### BACKGROUND OF THE INVENTION

The present invention relates to a fishing spinning reel in which a support member having a line guide portion is supported in such a manner as to rotate reversely between a line winding position and a line releasing position on a rotor linked with a handle for rotation.

For example, JP-A-2002-281873 discloses a fishing spinning reel which includes a flipping mechanism for supporting a support member having a line guide portion at a front part of a support arm of a rotor in such a manner as to rotate reversibly and biasing the support member so as to be switched between a line winding position and a line releasing position to thereby be held in place in either of the positions to which the support member is so switched, and additionally, a reversing and restoring mechanism for automatically restoring the support member staying in the line releasing position to the line winding position and a rotation control mechanism for controlling the rotation of the rotor in a line winding direction in order to prevent an erroneous restoration and failure or damage to the rotor due to abrupt rotation of the rotor during an releasing operation of a line.

In general, a fishing spinning reel includes an anti-reverse mechanism and a switching lever which enable the rotation of a rotor to be switched between an anti-reverse state (ON) and a rotation enabling state (OFF) in which the rotor is allowed to rotate forwards and backwards, and the anti-reverse mechanism is normally set in the ON state when the spinning wheel is in operation for fishing (winding a line).

Before releasing the line, an angler switches the anti-reverse mechanism to the rotation enabling state (with the switching lever located in the OFF position) to adjust the suspended length of a jig and the like from a tip top of a rod and thereafter causes the rotor to rotate forwards or backwards to have an appropriately adjusted suspended length.

In a series of continuous operations for releasing the line, there sometimes occurs a case where the angler thoughtlessly unwinds the line with a bail erected in such a state that the rotor is allowed to rotate forwards and backwards (with the switching lever located in the OFF position). As this occurs, due to momentum produced when casting the jig and the like at the tip of the line and effect of the position of a handle, the rotor rotates backwards with force so as to unwind the line, and a very large magnitude of force acts on the rotor and the reel main body, whereby the rotation control mechanism and the reversing and restoring mechanism are damaged, leading to a possibility that the life of the spinning reel is shortened.

### SUMMARY OF THE INVENTION

The invention has been made in view of these situations and an object thereof is to provide a fishing spinning reel which can restrict the reversal of a support member to a line releasing position when a switching lever is in a rotation enabling state.

A further object thereof is to provide a fishing spinning reel which can forcibly switch an anti-reverse mechanism lying in a rotation enabling state to an anti-reverse state when a bail support member is reversed to a line releasing position.
To solve the problem, the present invention provides the following arrangements.
(1) A fishing spinning reel comprising:
   a reel main body;
   a handle rotatably provided on the reel main body;
   a rotor which is rotated by operating the handle and includes an arm portion;
   a support member which is supported by the arm portion in such a manner as to rotate reversibly between a line winding position and a line releasing position and includes a line guide portion;
   an anti-reverse mechanism which includes a switching lever which can be switched between an anti-reverse state in which the rotor is prevented from rotating backwards, and a rotation enabling state in which the rotor is enabled to rotate forwards and backwards; and
   a controller which controls the support member in such a manner that reversal of the support member from the line winding position to the line releasing position is permitted when the anti-reverse mechanism is in the anti-reverse state and the reversal of the support member from the line winding position to the line releasing position is prohibited when the anti-reverse mechanism is in the rotation enabling state.
(2) The fishing spinning reel according to (1) further comprising a rotation control mechanism for restricting the rotor from rotating in a line winding direction when the support member is in the line releasing position and permitting the rotor to rotate forwards and backwards when the support member is in the line winding position,
   wherein the controller includes:
   an engagement portion provided on the reel main body; and
   a preventive member adapted to be brought into engagement with the engagement portion so as to move depending on switching of the anti-reverse mechanism between the rotation enabling state and the anti-reverse state, so that when the anti-reverse mechanism is in the rotation enabling state or is switched from the anti-reverse state to the rotation enabling state, the operation of the rotation control mechanism is controlled by the preventive member which is in engagement with the engagement portion.
(3) A fishing spinning reel comprising:
   a reel main body;
   a handle rotatably provided on the reel main body;
   a rotor which is rotated by operating the handle and includes an arm portion;
   a support member which is supported by the arm portion in such a manner as to rotate reversibly between a line winding position and a line releasing position and includes a line guide portion;
   an anti-reverse mechanism which includes a switching lever which can be switched between an anti-reverse state in which the rotor is prevented from rotating backwards, and a rotation enabling state in which the rotor is enabled to rotate forwards and backwards; and
   an automatic switching device for forcibly switching the anti-reverse mechanism to the anti-reverse state when the support member is reversed from the line winding position to the line releasing position with the anti-reverse mechanism lying in the rotation enabling state.
(4) The fishing spinning reel according to (1), wherein
   the automatic switching device includes:
   a first movable member which moves as the anti-reverse mechanism is switched between the anti-reverse state and the rotation enabling state; and
   a second movable member which moves towards and away from the first movable member as the support member is switched between the line winding position and the line releasing position,
   when the support member is reversed from the line winding position to the line releasing position with the anti-reverse mechanism lying in the rotation enabling state, the second movable member is brought into abutment with the first movable member so as to move the first movable member, so that the anti-reverse mechanism is switched from the rotation enable state to the anti-reverse stage,
wherein when the support member is switched to the line releasing position with the anti-reverse mechanism lying in the anti-reverse state, the first and second movable members are in a non-engagement state, so as to hold the anti-reverse state.

According to the fishing spinning wheel of the aspect of the invention, since the support member is made to be restricted from reversing to the line releasing position when the switching lever is in the rotation enabling state, the angler can recognize that the line releasing mode is not present by directly touching the support member or the bail, whereby not only can an erroneous line releasing operation be avoided beforehand in such a state that the anti-reverse mechanism is in the rotation enabling state, but also the application of a very large magnitude of force to the rotor and the reel main body can be prevented, thereby making it possible to realize a long life of the reel.

According to the fishing spinning wheel of the aspect of the invention, when the bail support member is reversed to the line releasing position, the anti-reverse mechanism, which is in the rotation enabling state can forcibly be switched to the anti-reverse state. Namely, an erroneous line releasing operation in the forward and backward rotating enabling state can be avoided in an ensured fashion, whereby a forcible reverse rotation of the rotor can be prevented which would otherwise take place due to momentum produced when the rod is swung downwards with force or effects imposed by the position of the handle. Consequently, the application of a very large magnitude of force to the rotor and the reel main body can be prevented, thereby making it possible to realize a long life of the reel.

### BRIEF DESCRIPTION OF THE INVENTION

Fig. 1 is a partially sectional view showing an overall configuration of a fishing spinning reel according to a first embodiment of the invention together with the configuration of a main part thereof.
Fig. 2A is an enlarged view of the sectional view of the fishing spinning reel according to the first embodiment shown in Fig. 1, showing a state in which a restoring movable member is disposed in a line releasing position, and Fig. 2B is an enlarged view of a portion denoted by reference numeral 2B in Fig. 2A.
Fig. 3A is an enlarged view of the sectional view of the fishing spinning reel according to the first embodiment shown in Fig. 1, showing a state in which the restoring movable member is disposed in a line winding position, and Fig. 3B is an enlarged view of a portion denoted by reference numeral 3B in Fig. 3A.
Fig. 4 is a schematic sectional view taken along the line IV-IV in Figs. 2A and 3A.
Fig. 5A is a diagram showing a state in which the restoring movable member is disposed in the line winding position, and Fig. 5B is a diagram showing a state in which the restoring movable member is disposed in the line releasing position.
Fig. 6A is a schematic sectional view taken along the line 6A-6A in Figs. 2A and 3A, and Fig. 6B is a schematic sectional view taken along the line 6B-6B in Fig. 6A.
Fig. 7A is a sectional view showing a state in which a flipping mechanism provided in an interior of an arm portion is located in a line winding position, and 7B is a sectional view showing a state in which the flipping mechanism provided in the interior of the arm portion is located in a line releasing position.
Fig. 8 is a partially sectional view showing an overall configuration of a fishing spinning reel according to a second embodiment of the invention together with the configuration of a main part thereof.
Fig. 9A is an enlarged view of the sectional view of the fishing spinning reel according to the second embodiment shown in Fig. 8, showing a state in which a restoring movable member is disposed in a line releasing position, Fig. 9B is a drawing showing a state in which the restoring movable member is disposed in the line winding position, Fig. 9C is a schematic sectional view taken along the line 2C-2C in Fig. 9A, and Fig. 9D is a schematic sectional view taken along the line 2D-2D in Fig. 9A.
Fig. 10A is an enlarged view of the sectional view of the fishing spinning reel according to the second embodiment shown in Fig. 8, showing a state in which the restoring movable member is disposed in a line releasing position, Fig. 10B is a drawing showing a state in which the restoring movable member is disposed in the line releasing position, Fig. 10C is a schematic sectional view taken along the line 3C-3C in Fig. 10A, and Fig. 10D is a schematic sectional view taken along the line 3D-3D in Fig. 10A.
Fig. 11A is a schematic sectional view taken along the line 4A-4A in Fig. 9A and Fig. 11B is a schematic partial sectional view showing a movement of a projecting portion of a control shaft which moves when a switching lever is operated.
Fig. 12 is a schematic partial sectional view showing a state in which a projecting portion of a switching member which moves when a bail is moved from a position shown in Fig. 9 to a position shown in Fig. 10 moves towards a projecting portion of the control shaft so as to press against the projecting portion of the control shaft, whereby the switching lever which is in a rotation enabling state is switched to an anti-reverse state.
Fig. 13A is a schematic sectional view taken along the line 6A-6A in Figs. 9A and 10A, and Fig. 13B is a schematic sectional view showing a portion of Fig. 13A which includes the control shaft in an enlarged fashion.
Fig. 14A is a sectional view showing a state in which a flipping mechanism provided in an interior of an arm portion is located in a line winding position, and 14B is a sectional view showing a state in which the flipping mechanism provided in the interior of the arm portion is located in a line releasing position.

### DETAILED DESCRIPTION OF PREFERRED EMBODIMENTS

Hereinafter, a best mode for carrying out the invention will be described by reference to the accompanying drawings.

### First Embodiment

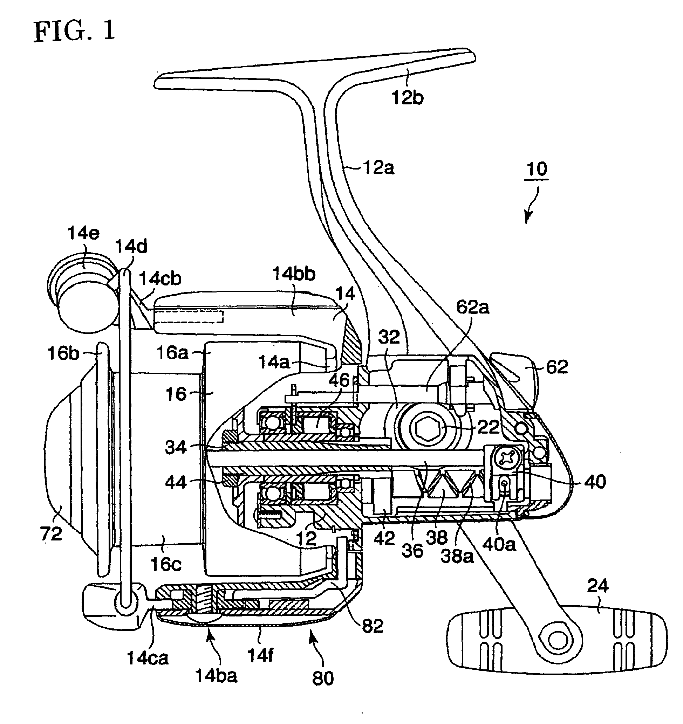

Fig. 1 is a partially sectional view showing an overall configuration of a fishing spinning reel 10 according to a first embodiment of the invention together with the configuration of a main part thereof.

The fishing spinning reel 10 has a reel main body 12 which is formed of, for example, a metal into a rigid construction, a rotor 14 which is provide rotatably at the front of the reel main body 12, and a spool 16 which is provided in such a manner as to move back and forth in synchronism with rotary motion of the rotor 14. This reel main body 12 is mounted on a fishing rod, not shown, via a reel foot or a rod mount portion 12b which is formed at an end portion of a leg portion 12a which is extended from a position where the rotor 14 and the spool 16 are provided.

A handle shaft 22 is supported rotatably within the reel main body 12, and a handle 24, which is operated to wind a line, is attached to a projecting end portion of the handle shaft 22. A winding drive mechanism is brought into engagement with the handle shaft 22 for driving the rotor 14 to perform a winding operation. This winding drive mechanism includes a drive gear 32 attached to the handle shaft 22 and having internal teeth formed on an inside thereof and a tubular pinion gear 34 meshing with the drive gear 32, extending in a direction which intersects the handle shaft 22 at right angles and having a cavity portion formed in an interior thereof in such a manner as to extend in an axial direction thereof. The pinion gear 34 is supported rotatably on a support portion 50, which will be described later, via a bearing 34a, and a spool shaft 36, which extends in a direction which intersects the handle shaft 22 at right angles and to a distal end side of which the spool 16 is attached, is supported in the cavity portion in such a state that the spool shaft 36 is inserted into the cavity portion in such a manner as to move in the axial direction.

In addition, an oscillating mechanism for reciprocating the spool shaft 36 is brought into engagement with the pinion gear 34. This oscillating mechanism has a screw shaft which extends in parallel with the spool shaft 36 and an engagement element 40 adapted to be brought into engagement with a spiral groove 38a formed on an outer circumferential surface of the screw shaft 38 and fastened to a proximal end portion of the spool shaft 36 with a machine screw. An interlocking gear 42 adapted to mesh with the pinion gear 34 is attached to an end portion of the screw shaft 38, and by the screw shaft 38 being driven to rotate via the pinion gear 34 and the interlocking gear 42, the spool shaft 36 is caused to move back and forth via an engagement pin 40s of the engagement element 40 which is guided into the spiral groove 38a.

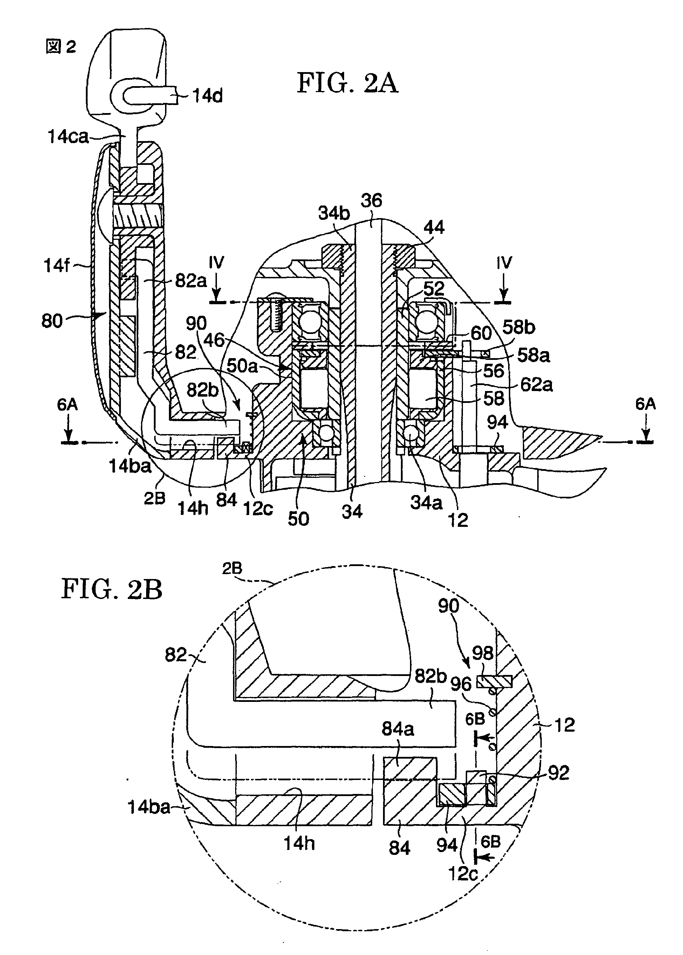

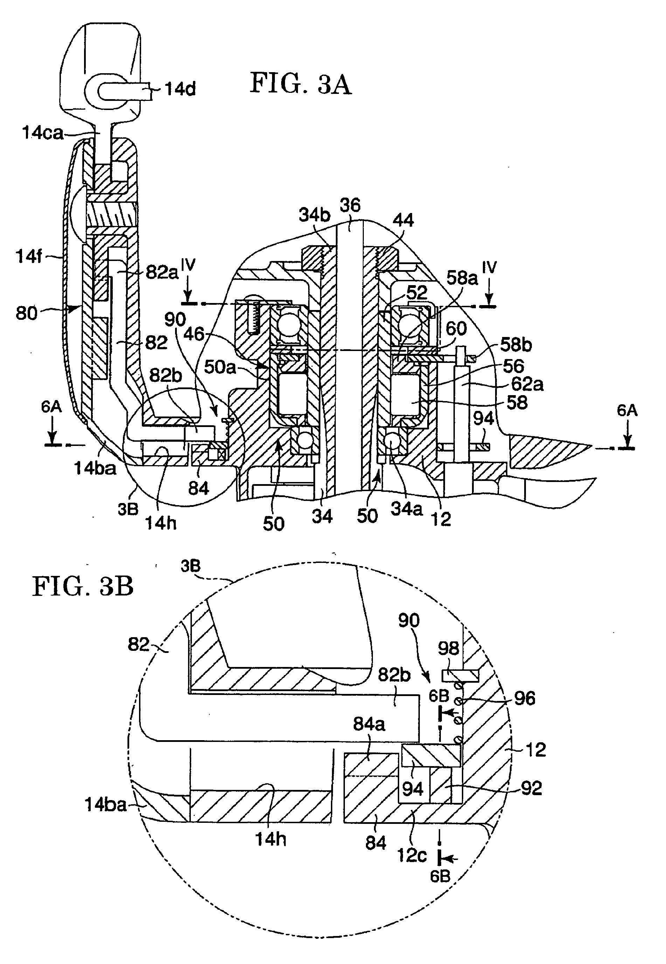

The pinion gear 34 is extended towards the spool 16 side, and the rotor 14 is attached to a distal end portion of the pinion gear 34 via a nut 44. In addition, a rolling type one-way clutch (an anti-reverse mechanism) 46 shown in Figs. 2A and 3A is attached to an intermediate portion of the pinion gear 34.

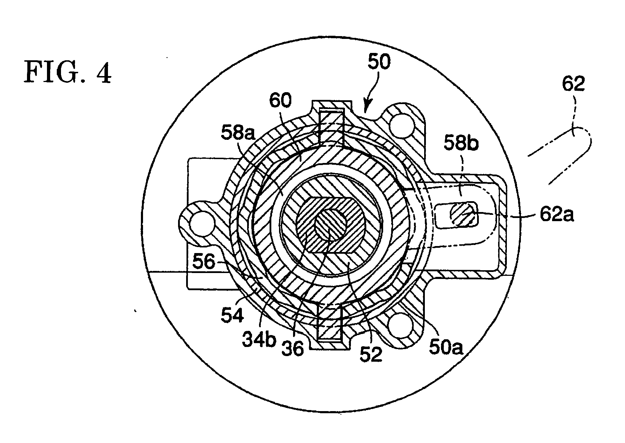

Figs. 2A, 3A and 4 show the support portion 50 which is provided on the reel main body 12 for supporting the pinion gear 34. This support portion 50 has a stepped portion 50a in front of the bearing 34a, and the rolling type one-way clutch 46 is accommodated and supported within the stepped portion 50a. In this one-way clutch 46, a plurality of roller-like rolling members 58 which are retained by a retainer or cage 58a are provided between an inner ring member 52 which is fitted on an operating portion 34b of the pinion gear 34 in such a manner as not to rotate thereon and an outer ring member 56 fitted in the front stepped portion 50a. The outer ring member 56 is prevented from rotating within the support portion 50 by a rotation preventive member 60.

The rolling members 58 are caused to move between a clutch 46 operating state (refer to Fig. 2A) in which the rolling members 58 act as a wedge between an outer circumferential surface of the inner ring member 52 which is formed by a smooth cylindrical surface and an inner circumferential surface of the outer ring member 56 and a clutch 46 non-operating state (refer to Fig. 3A) in which the rolling members 58 roll freely between the outer circumferential surface of the inner ring member 52 and the inner circumferential surface of the outer ring member 56. Namely, the cage 58a can move the rolling members 58 between a free rotation permitted region and a rotation restricted region. In addition, an operation arm 58b is caused to project radially outwards from the cage 58a. A switching lever 62 (refer to Fig. 1) which is disposed at a rear end portion of the reel main body 12 is connected to the operation arm 58b via a control shaft 62a which extends in a longitudinal direction within the reel main body 12.

Because of this configuration, by controlling the switching lever 62 (refer to Fig. 1) attached to the rear end portion of the reel main body 12, the control shaft 62a is rotated so as to move the cage 58a between the free rotation permitted region and the rotation restricted region, so that the one-way clutch 46 is made to be switched between the operating state (an anti-reverse state in which the rotor 14 can rotate forwards) (refer two Fig. 2A) and the non-operating state (a rotation enabling state in which the rotor 14 can rotate forward and backwards) (refer to Fig. 3A). In this case, by the switching lever 62 being switched to the anti-reverse state (ON), the handle 24 (the rotor 14) is permitted to rotate in a forward direction (for winding a line) and is prevented from rotating in a reverse direction (for releasing the line), while by the switching lever 62 being switched to the rotation enabling state (OFF), the handle 24 (the rotor 14) is allowed to rotate forwards and backwards.

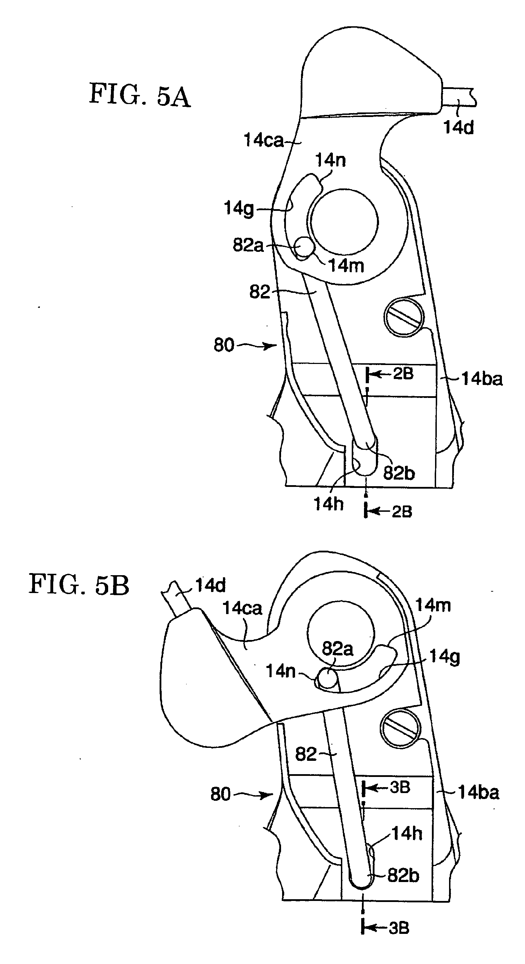

The rotor 14 has a tubular portion (a cylindrical portion) 14a which is situated within a skirt portion 16a of the spool 16 and a pair of arm portions 14ba, 14bb. A first and second bail support members 14ca, 14cb (reference numeral 14c is used when they are represented as a bail support member) are supported rotatably (reversibly) between a line winding position (refer to Fig. 5A) and a line releasing position (refer to Fig. 5B) at respective front end portions of the arm portions 14ba, 14bc (reference numeral 14b is used when they are represented as an arm portion). A bail 14d for picking up the fine which is in the line releasing state is provided between the bail support members 14ca, 14cb. In this case, one of proximal end portions of the bail 14d is attached to the bail support member 14ca, while the other end portion of the bail 14d is attached to a line guide portion 14e which is provided integrally on the bail support member 14cb.

The spool 16 includes a line winding barrel portion 16c round which a line is wound between the skirt portion 16a and a front side flange 16b and is attached to the spool shaft 36 via a drag knob 72.

In the configuration that has been described above, by rotating the handle 24 in a forward rotational direction to wind the line, the rotor 14 is driven to rotate via the drive gear 32 and the pinion gear 34, and the spool 16 is caused to move back and forth via the pinion gear 34 and the oscillating mechanism, whereby the line is wound uniformly round the winding barrel portion 16c of the spool 16 via the line guide portion 14e.

Then, a reversing mechanism (a rotation control mechanism) 80 of the bail 14d is provided on the reel main body 12 and the rotor 14 for restricting the rotation of the rotor 14 in a line winding direction when the bail 14d is disposed in the line releasing position. Hereinafter, the configuration of the reversing mechanism 80 in the first embodiment will be described by reference to Figs. 2A, 3B, 3A, 4B 5A and 5B.

Fig. 2B is a sectional view taken along the line 2B-2B in Fig. 5A, and Fig. 3B is a sectional view taken along the line 3B-3B in Fig. 5B. Figs. 5A and 5B show a state in which an external cover 14f (refer to Figs. 2A and 3A) is removed so as to expose a restoring movable member 82. In addition, Fig. 5A is a drawing showing a state in which the bail 14d is rotated to the line winding position, and Fig. 5B is a drawing showing a state in which the bail 14d is rotated to the line releasing position.

The reversing mechanism 80 is provided within the arm portion 14ba of the rotor 14 and includes a vertically movable restoring movable member 82 and a restoring thrust contact portion 84 which is provided at a front part of the reel main body 12 and with which part of the restoring movable member 82 can be brought into abutment. In this case, the restoring thrust contact portion 84 is such as to be formed on an outer circumferential portion (a flange portion 12c) of a front end face of the reel main body 12 in such a manner as to project therefrom and includes a restricting portion 84a with which a boss (abutment portion) 82b of the restoring movable member 82, which will be described later, is brought into abutment to thereby restrict the rotation of the rotor 14 in the line winding direction.

The restoring movable member 82 in the first embodiment is made into a rod shape so as to extend into the arm portion 14ba, and a boss 82a is formed at one end side of the restoring movable member 82 in such a manner as to be bent towards an outside of the reel and at the other end side of the restoring movable member 82, the boss (abutment portion) 82b is formed in such a manner as to be bent so as to enter an interior of the cylindrical portion 14a from the arm portion 14ba.

In the first bail support member 14ca which is supported rotatably on the arm portion 14ba, a substantially arc-shaped elongated hole 14g is formed in the vicinity of a rotational support portion thereof, and the boss 82a (refer to Figs. 2A and 3A) of the restoring movable member 82 is provided in the elongated hole 14g. In addition, a vertically extending elongated hole 14h is formed at a lower end portion of the arm portion 14ba, so that the boss 82b (refer to Figs. 2A, 2B, 3A and 3B) of the restoring movable member 82 is provided in the elongated hole 14h.

In the configuration that has been described above, the restoring movable member 82 on which the bosses 82a, 82b are formed and the respective elongated holes 14g, 14h are configured in such a manner as to be in the following positional relationship and to operate in the following manner.
As is shown in Fig. 5A, when the support member 14c of the bail 14d is in the line winding position, the boss 82a is in engagement with a lower end portion 14m of the elongated hole 14g, and the boss 82b is located in an upper position in the elongated hole 14h. As this occurs, as is shown in Figs. 2A and 2B, the boss 82b is located in a position where it does not interfere with the restoring thrust contact portion 84 formed on the reel main body 12. In other words, the boss 82b is made not to be brought into abutment with the restricting portion 84a of the restoring thrust contact portion 84 even in the event that the rotor 14 rotates.

In addition, when the bail 14d is rotated towards the line releasing position as is shown in Fig. 5B, an upper end portion 14n of the elongated hole 14g is brought into engagement with the boss 82a to thereby push the boss 82a (the restoring movable member 82) downwards. When the bail 14d is rotated to the line releasing position finally, the boss 82b lying at the lower end side boss 82b is made to be located in a lower position in the elongated hole 14h as is shown in Fig. 5B. As this occurs, as is shown in Figs. 3A and 3B, the boss 82b is in a position where it interferes with the restoring thrust contact portion 84. In other words, when the rotor 14 is caused to rotate forwards (the rotor is caused to rotate in the line winding direction) with the boss 82a located in the line releasing position, the boss 82b is brought into abutment with the restricting portion 84a of the restoring thrust contact portion 84, whereby the rotation of the rotor 14 is made to be restricted.

As is shown in Figs. 2A, 2B, 3A, 3B, 6A and 6B, in the spinning reel 10 configured as has been described heretofore, a control mechanism (control means) 90 is provided on the reel main body 12 and the rotor 14 for controlling the movement of the bail 14d in such a manner that the bail 14d does not reverse from the line winding position to the line releasing position (holding the bail 14d in the line winding position) with the switching lever 62 located in the OFF position.

The control mechanism 90 has a plurality of raised portions (engagement portions) 92 which are provided on the flange portion 12c of the reel main body 12 in such a manner as to be disposed further transversely inwards (closer to the spool shaft 36) than the restoring thrust contact portion 84, a substantially ring-shaped preventive collar (a preventive member) 94 for preventing the movement of the position of the boss 82b of the restoring movable member 82 from the line winding position to the line releasing position with the switching lever 62 located in the OFF position, and a coil spring 96 functioning as a biasing means for biasing the preventive collar 94 towards the raised portions 92.

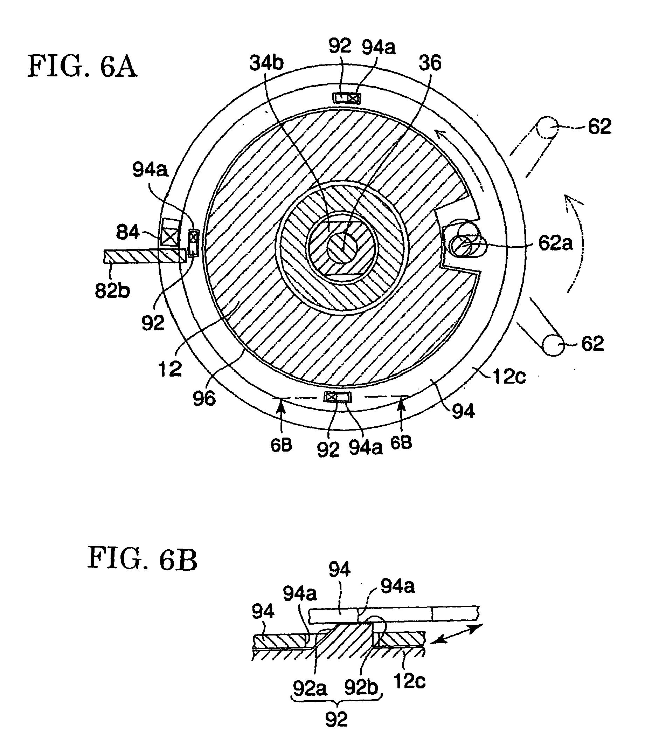

The preventive collar 94 is provided on the control shaft 62a and is rotated within a predetermined range by an ON/OFF operation (switching) of the switching lever 62 (refer to Fig. 6A). For.example, a plurality of rectangular openings 94a are formed in the preventive collar 94 at, for example, predetermined intervals. In addition, the raised portions 92 are also formed at the same intervals as those of the openings 94a in the preventive collar 94. Namely, the plurality of raised portions 92 are formed at, for example, predetermined intervals on the reel main body 12.

In addition, the preventive collar 94 is placed on the plurality of raised portions 92 provided on the reel main body 12. On the other hand, an inclined surface 92a and a flat surface 92b which continuously connect to the inclined surface 92a are formed on the raised portion 92. In addition, the raised portions 92 are provided in such a manner as to go out of and into the rectangular openings 94a in the preventive collar 94. Because of this, the preventive collar 94 is made to be raised or lowered along the inclined surfaces 92a of the raised portions 92 in association with the rotation of the preventive collar 94 as a result of the switching lever 62 being switched (refer to Fig. 6B). In particular, since the orientation of the inclined surface 92a of the raised portion 92 is specified and the control range of the switching lever 62 is also specified, the preventive collar 94 is located in a position indicated by a solid line in Fig. 6B when the switching lever 62 is disposed in the ON position, while when the switching lever 62 is disposed in the OFF position, the preventive collar 94 is located in a position indicated by a broken line in Fig. 6B.

In addition, one end (an upper end in Figs. 2B and Fig. 3B) of the coil spring 96 is brought into abutment with a dislocation preventive member 98 which is fixed to the reel main body 12. On the other hand, the other end (a lower end) of the coil spring 96 is brought into abutment with the preventive collar 94. Because of this, the preventive collar 94 is biased downwards as viewed in Figs. 2B and 3B by the coil spring 96.

Consequently, when the switching lever 62 is switched from the ON state to the OFF state, the preventive collar 94 climbs up the inclined surfaces 92a of the raised portions 92 against the biasing force of the coil spring 96 in a direction indicated by an arrow in Fig. 6B so as to rest on the flat surfaces 92b of the raised portions 92. On the other hand, when the switching lever 62 is switched from the OFF state to the ON state, the preventive collar 94 is caused to slide down the inclined surfaces 92a of the raised portions 92 in a direction indicated by an arrow in Fig. 6B by virtue of the biasing force of the coil spring.

A flipping mechanism (a reversing mechanism) 100 is provided in an interior of the arm portion 14bb which supports rotatably the second bail support member 14cb for switching and biasing the bail support member 14c between the line winding position and the line releasing position to thereby be held in place in either of the line winding position and the line releasing position to which the bail support member 14c is so switched. Specifically, this flipping mechanism 100 includes a tubular oscillating member 104 which is attached to the arm portion 14bb via a pivot 102 in such a manner as to oscillate, a switching member 106 which connects the bail support member 14cb and the oscillating member 104 and switches the bail support member 14c between two positions in cooperation with the oscillating member 104 and a compression coil spring 108 which is interposed between the switching member 106 and the oscillating member 104.

The bail support member 14cb has a substantially semi-annular mount portion 110 which is supported rotatably by a pin 110a in an interior of the arm portion 14bb. This mount portion 110 is made to be guided and supported by an arc-shaped space which is defined between an arc-shaped inner surface of the arm portion 14bb and an outer circumferential surface of the pin 110a.

In addition, the switching member 106 has a connecting end portion 106a having an engagement portion 106b which is brought into rotatable engagement and connection with the mount portion 110 in a position which deviates from a center of the pin 110a and a shaft portion 106c which is inserted into a tubular interior of the oscillating member 104. In addition, the compression coil spring 108 is fitted on an outer circumference of the shaft portion 106c, and one end side of the compression coil spring 108 is inserted into the oscillating member 104 so as to be received at a bottom portion of the oscillating member 104, while the other end side of the compression coil spring 108 is received by a spring receiving surface of the switching member 106.

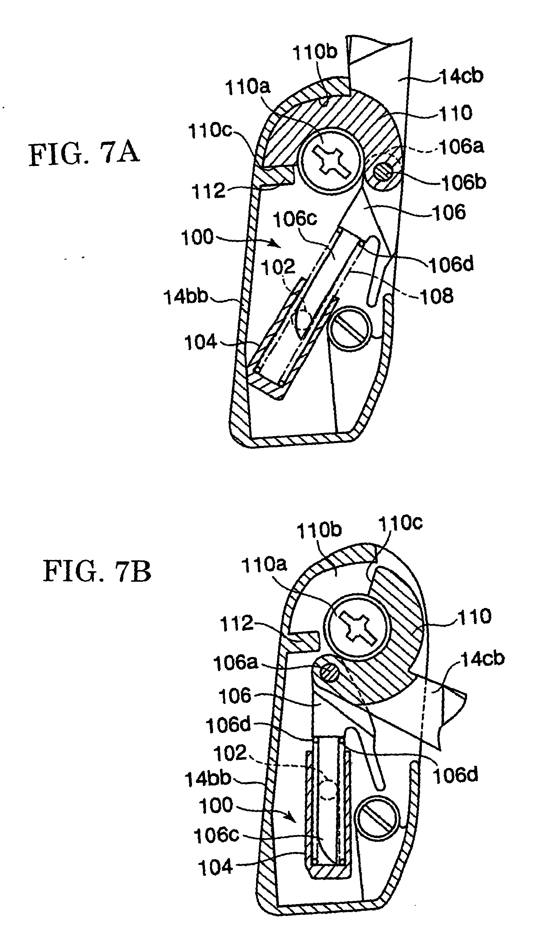

Fig. 7A shows a state in which the second bail support member 14cb is switched to be held in the line winding position by virtue of a biasing force of the compression coil spring 108. In this state, the compression coil spring 108 imparts the second bail support member 14cb its biasing force in a direction in which the biasing force acts to rotate the second bail support member 14cb in a counterclockwise direction as viewed in Fig. 7A and brings an end portion 110c of the mount portion 110 of the second bail support member 14cb into abutment with an abutment portion 112 of the arm portion 14bb. When the second bail support member 14cb of the bail 14d is rotated manually from the line winding position in a clockwise direction as viewed in Fig. 7A against the basing force of the compression coil spring 108 (as this occurs, the first bail support member 14ca which connects to the second bail support member 14cb via the bail 14d is also rotated in the clockwise direction as viewed in the same figure), the switching member 106 which is in engagement and connection with the second bail support member 14cb rotates about the engagement portion 106b in the counterclockwise direction relative to the second bail support member 14cb while moving together with the second bail support member 14cb and causes the oscillating member 104 to oscillate about the pivot 102 in the counterclockwise direction by the shaft portion 106c thereof which is received in the oscillating member 104. In addition, as this occurs, the switching member 106 compresses the compression coil spring 108 which is interposed between the shaft portion 106c thereof and the oscillating member 104 by the shaft portion 106c entering the interior of the oscillating member 104. Then, the compression coil spring 108 comes to impart the second bail support member 14cb its biasing force in a direction in which the biasing force acts to rotate the second bail support member 14cb in a clockwise direction as viewed in Fig. 7A (in a direction in which the second bail support member 14cb is rotated to the line releasing position) at a point in time when the second bail support member 14cb has been rotated in the clockwise direction to a region which surpasses a dead point of the flipping mechanism 100, and thereafter, the second bail support member 14cb is held in the line releasing position by the biasing force of the compression coil spring 108 which is now compressed. This state is shown in Fig. 7B.

In addition, when the second bail support member 14cb is manually rotated from the line releasing position shown in Fig. 7B in the counterclockwise direction as viewed in the same figure against the biasing force of the compression coil spring 108, the switching member 106 which is in engagement and connection with the second bail support member 14cb rotates about the engagement portion 106b in the clockwise direction relative to the second bail support member 14cb while moving together with the second bail support member 14cb and causes the oscillating member 104 to oscillate about the pivot 102 in the clockwise direction by the shaft portion 106c thereof. Then, the compression coil spring 108 comes to impart the second bail support member 14cb its biasing force in a direction in which the biasing force acts to rotate the second bail support member 14cb in a counterclockwise direction as viewed in Fig. 7B (in a direction in which the second bail support member 14cb is rotated to the line winding position) at a point in time when the second bail support member 14cb has been rotated in the counterclockwise direction to a region which surpasses a dead point of the flipping mechanism 100, and thereafter, the second bail support member 14cb (and the first bail support member 14ca which connects to the second bail support member 14cb via the bail 14d) is rotated to the line winding position not manually but by virtue of the biasing force of the compression spring 108 which is now extending and is then held in this position (the position shown in Fig. 7A).

The function of the fishing spinning reel 10 that has been described heretofore will be described below.
Normally, in releasing the line (casting the jig and the like), the switching lever 62 is disposed in the anti-reverse state, which is the ON position, the first and second bail support members 14ca, 14cb (the bail 14d) are operated to reverse from the line winding position (refer to Figs. 2A, 5A, 7A) to the line releasing position (refer to Figs. 5B, 7B) by the flipping mechanism 100, the line is dislocated from the line guide portion 14e, and the rod is forcibly swung down from its upward casting position.

In this way, when the bail 14d is rotated from the line winding position shown in Fig. 5A to the line releasing position shown in Fig. 5B by the flipping mechanism 100, the restoring movable member 82 is pressed downwards by the upper end portion 14n of the elongated hole 14g which is brought into abutment with the upper end side boss 82a and is then moved to a position shown in Fig. 5B. By this action, the lower end side boss 82b enters a position where it can be brought into abutment with the restricting portion 84a of the restoring thrust contact portion 84 without being restricted by the control mechanism 90.

Next, during the series of actions taking place before the line is unwound in actual fishing, when the switching lever 62 is disposed in the OFF position, the preventive collar 94 is placed on upper sides of the flat surfaces 92b of the raised portions 92 while the preventive collar 94 is rotating against the biasing force of the coil spring 96. Namely, the preventive collar 94 moves upwards as viewed in Fig. 3A along the axial direction of the spool shaft 36 relative to the switching lever 62 being disposed in the ON position. As this occurs, since the preventive collar 94 is in such a state that the preventive collar 94 rests on the upper sides of the raised portions 92, even in the event that the angler thoughtlessly attempts to reverse the bail support members 14ca, 14cb from the line winding position to the line releasing position when the switching lever 62 (the anti-reverse mechanism) is in the rotation enabling state, the boss 82b of the restoring movable member 82 is restricted from moving downwards as viewed in Figs. 3A and 3B (moving from the line winding position to the line releasing position) by the preventive collar 94. Namely, the bail 14d is prevented from rotating from the line winding position to the line releasing position (the bail 14d is prevented from being erected). Then, the angler can recognize that the line releasing mode is not present in an ensured fashion from the fact that the angler cannot reverse the bail 14d manually and directly, and the angler switches the mode of the spinning reel 10 to the normal anti-reverse state. By adopting the configuration described above, the abrupt and forcible reverse rotation of the rotor 14 is prevented which would otherwise take place due to the momentum produced when the rod is swung downwards with force or effects imposed by the position of the handle 24, thereby making it possible to prevent the application of a large magnitude of force to the rotor 14, the reversing mechanism 80 of the reel main body 12 and the arm portion 14b.

On the other hand, when the switching lever 62 is switched from OFF to ON in such a state that the restoring movable member 82 is in the line winding position, the control shaft 62a connected to the switching lever 62 rotates. Then, the preventive collar 94 moves apart from the boss 82b of the restoring movable member 82 to the position indicated by the solid line in Fig. 6B. As this occurs, since the boss 82b of the restoring movable member 82 and the preventive collar 94 are in a spaced apart state, the boss 82b is allowed to move within the range of the elongated hole 14h lying at the lower end portion of the arm portion 14b. Because of this, the boss 82b of the restoring movable member 82 is allowed to move between the solid line (the line winding position) and the broken line (the line releasing position) in Fig. 2B. Namely, the bail support member 14c is allowed to freely rotate between the line winding position (refer to Fig. 5A) and the line releasing position (refer to Fig. 5B).

When the switching lever 62 is in the ON position, the rotor 14 is prevented from rotating in the reverse rotational direction by the rolling type one-way clutch 46. In rotating the bail 14d to the line releasing position in this state, although the rotor 14 is allowed to rotate only in the forward rotational direction, when the rotor 14 is operated to rotate, the lower end side boss 82b is brought into abutment with the restricting portion 84a, whereby the rotor 14 is restricted from rotating in the forward rotational direction, resulting in a forward and backward rotation disabling state.

Namely, in casting the jig and its related parts at the tip of the line, the rotor 14 is made not to rotate by the reverse rotation preventing action by the rolling type one-way clutch 46 and the forward rotation preventing action by the reversing mechanism 80.

Then, when the bail 14d is rotated to the line winding position shown in Fig. 5A after the jig and its related parts have been cast, as is indicated by a solid line in Fig. 2B, the lower end side boss 82b of the restoring movable member 82 is moved to a position where the boss 82b does not interfere with the restoring thrust contact portion 84. Consequently, the rotor 14 is put in a state in which it is now allowed to rotate freely in the forward rotational direction.

As has been described heretofore, according to the first embodiment, the following will result.
When the switching lever 62 is disposed in the ON position, the restoring movable member 82 can be switched freely between the line winding position and the line releasing position. In addition, even though the bail 14d is rotated so as to move the restoring movable member 82 between the line winding position and the line releasing position, the switching lever 62 can be held in the ON position.

On the other hand, when the switching lever 62 is disposed in the OFF position, the restoring movable member 82 is allowed to be disposed only to the line winding position without being restricted by the preventive collar 94 but is restricted from moving to the line releasing position, so that the support members 14ca, 14cb are restricted from reversing to the line releasing position.

Consequently, since the restoring movable member 82 of the bail 14d cannot be reversed from the line winding position to the line releasing position with the switching lever 62 located in the OFF position, the angler can recognize in the ensured fashion that the switching lever 62 is not positioned in the casting mode, thereby making it possible to prevent such an erroneous operation that the line is unwound with the switching lever 62 located in the OFF position.

Note that in the first embodiment, while the single coil spring (the coil spring having a large diameter) 96 is described as being provided concentrically about the spool shaft 36, a plurality of coil springs (coil springs having a small diameter) may preferably be provided at appropriate intervals in the position where the preventive collar 94 is disposed. In addition, provided that the preventive collar 94 can be biased downwards as viewed in Figs. 2B and 3B, the biasing means is not limited to the coil spring 96, and hence, various types of springs or elastic elements can be used.

In addition, in the first embodiment, while the preventive collar 94 is described as being formed into the annular or ring shape, the preventive collar 94 does not have to be formed into the annular shape, and hence, a preventive means may preferably be provided in a range where the boss 82b of the restoring movable member 82 can be pressed against thereby.
Furthermore, in moving the preventive collar 94 back and force, in place of the cam engagement, the rotation of the switching lever 62 may be converted into back and forth motions of the preventive collar 94 through screw engagement with the reel main body 12.

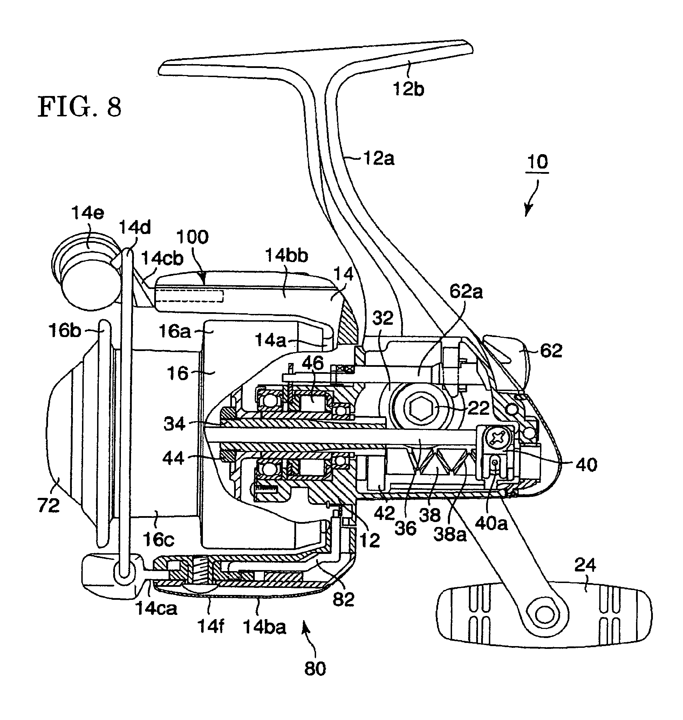

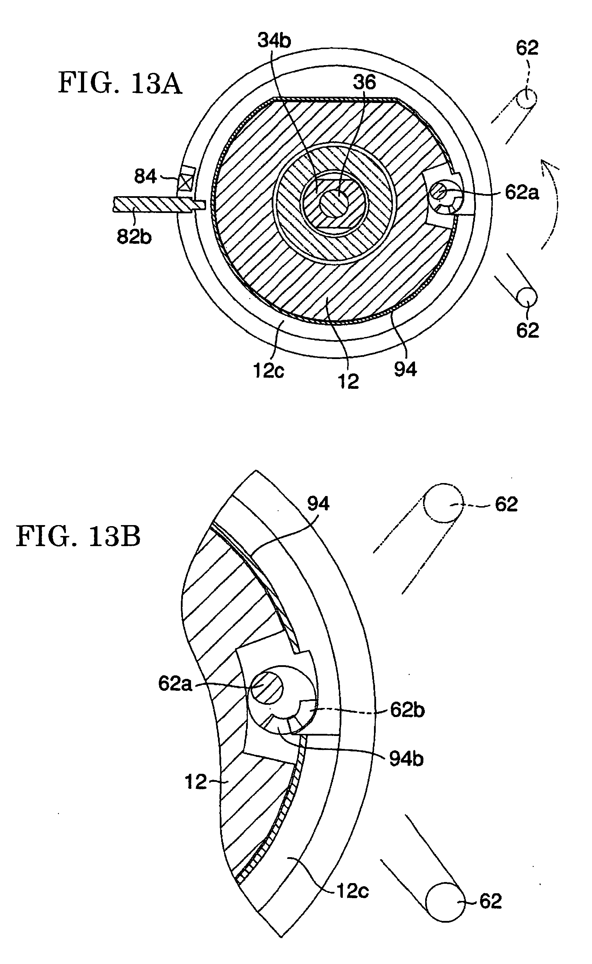

While the invention has been described specifically based on the first embodiment by reference to the accompanying drawings, the invention is not limited to the first embodiment, the reversing mechanism 80, the anti-reverse mechanism 46, the control mechanism 90, the flipping mechanism 100 and the like may be modified variously without departing form the spirit and scope of the invention, and all those embodiments are understood to be contained in the invention.
A fishing according to a second embodiment of the invention will be described with reference to Figs. 8 to 14B.
In the second embodiment of the invention, those portions similar in construction to the corresponding portions of the first embodiment will be designated by identical reference numerals, respectively, and explanation thereof will be omitted.

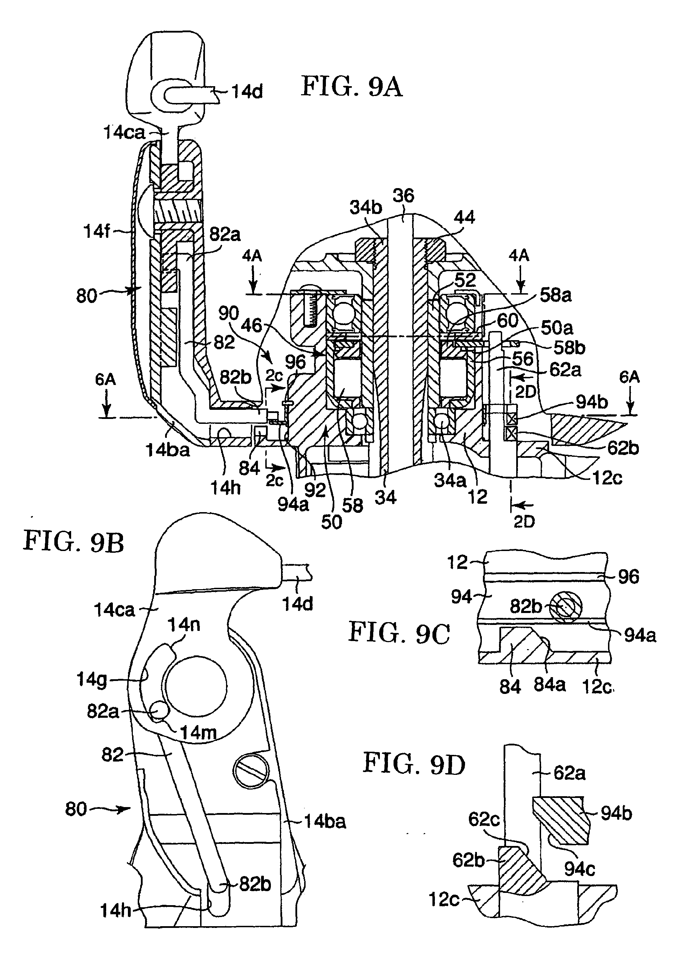

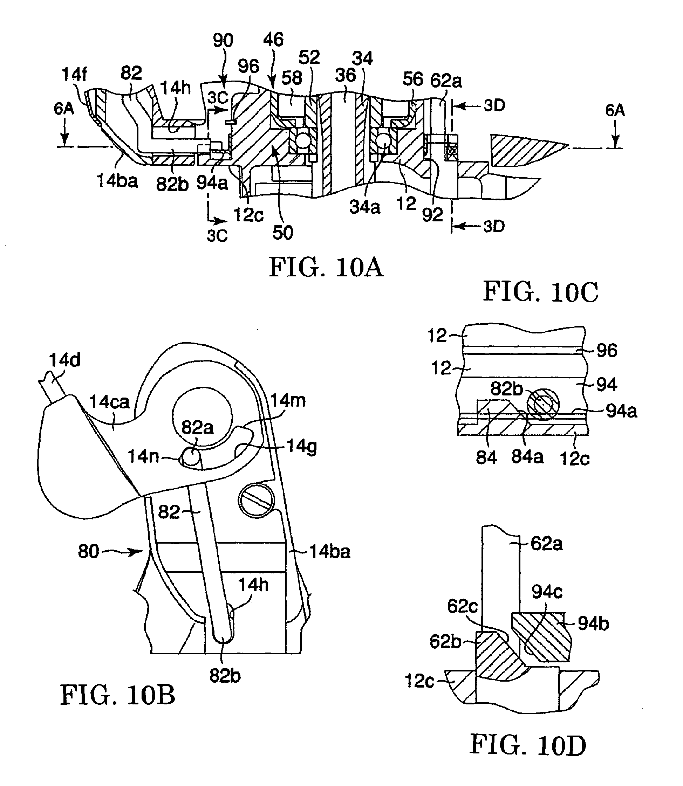

In the first bail support member 14ca which is supported rotatably on the arm portion 14ba, a substantially arc-shaped elongated hole 14g is formed in the vicinity of a rotational support portion thereof, and the boss 82a (refer to Figs. 9A and 10A) of the restoring movable member 82 is provided in the elongated hole 14g. In addition, a vertically extending elongated hole 14h is formed at a lower end portion of the arm portion 14ba, so that the boss 82b (refer to Figs. 9A and 10A) of the restoring movable member 82 is provided in the elongated hole 14h.

In the configuration that has been described above, the restoring movable member 82 on which the bosses 82a, 82b are formed and the respective elongated holes 14g, 14h are configured in such a manner as to be in the following positional relationship and to operate in the following manner.
As is shown in Fig. 9B, when the support member 14c of the bail 14d is in the line winding position, the boss 82a is in engagement with a lower end portion 14m of the elongated hole 14g, and the boss 82b is located in an upper position in the elongated hole 14h. As this occurs, as is shown in Figs. 9A and 9C, the boss 82b is located in a position where it does not interfere with the restoring thrust contact portion 84 formed on the reel main body 12. In other words, the boss 82b is made not to be brought into abutment with the restricting portion 84a of the restoring thrust contact portion 84 even in the event that the rotor 14 rotates.

In addition, when the bail 14d is rotated towards the line releasing position as is shown in Fig. 10B, an upper end portion 14n of the elongated hole 14g is brought into engagement with the boss 82a to thereby push the boss 82a (the restoring movable member 82) downwards. When the bail 14d is rotated to the line releasing position finally, the boss 82b lying at the lower end side of the restoring movable member 82 is made to be located in a lower position in the elongated hole 14h as is shown in Fig. 10B. As this occurs, as is shown in Figs. 10A and 10C, the boss 82b is in a position where it interferes with the restoring thrust contact portion 84. In other words, when the rotor 14 is caused to rotate forwards (the rotor is caused to rotate in the line winding direction) with the boss 82a located in the line releasing position, the boss 82b is brought into abutment with the restricting portion 84a of the restoring thrust contact portion 84, whereby the rotation of the rotor 14 is made to be restricted.

As is shown in Figs. 9A to 9D, 6A and 6B, in the spinning reel 10 configured as has been described heretofore, an automatic switching mechanism (an automatic switching means) 90 is provided on the reel main body 12 and the rotor 14 which forcibly switches the switching lever 62 to the ON position while the switching lever 62 is in the OFF position, when the bail support member 14c is reversed from the line winding position to the line releasing position.

The automatic switching mechanism 90 has a coil spring 92 which is supported at one end (a lower end) thereof on an external flange portion 12c of the support portion 50 of the reel main body 12, a switching member 94 provided at the other end (an upper end) of the coil spring 92, and a dislocation preventive member 96 for restricting the movement of the switching member 94. Namely, the switching member 94 is provided between the coil spring 92 and the dislocation preventive member 96.

The switching member 94 is formed into a substantially annular shape (a substantially tubular shape) so as to move along a longitudinal direction on an outside of the support portion 50 of the reel main body 12. A control shaft 62a of the switching lever 62 is inserted into the switching member 94. Because of this, the switching member 94 rotates as the switching lever 62 is operated to be switched between the ON position and the OFF position. Furthermore, a flange portion 94a is formed on the switching member 94 in such a manner as to be pressed against by the boss 82b of the reversing movable member 82. Because of this, when the flange portion 94a of the switching member 94 is pressed against by the boss 82b, the flange portion 12c of the reel main body 12 moves along the outside of the support portion 50 of the reel main body 12 against a biasing force of the coil spring 92.

In addition, on the boss 82b of the restoring movable member 82, a position which is disposed on the reversing thrust contact portion 84 is formed smaller in diameter than a position which is pressed against by the flange portion 94a of the switching member 90. Because of this, the boss 82b of the restoring movable member 82 and the flange portion 94a of the switching member 94 can be provided in a narrower space.

On the switching member 94, a projecting portion (a second movable member) 94b is formed on the periphery of the control shaft 62a of the switching lever 62 in such a manner as to project therefrom towards the flange portion 12c of the reel main body 12. On the other hand, a projecting portion (a first movable member) 62b is formed integrally on the control shaft 62a of the switching lever 62 in parallel with the projecting portion 94b of the switching member 94 so that the projecting portion 94b is brought into abutment with the projecting portion 62b in such a manner as to move towards and away therefrom. In particular, the projecting portion 62b is provided in such a state that the projecting portion 62b projects towards the an operation arm 58b relative to the flange portion 12c of the reel main body 12.

Inclined surfaces 94c, 62c are formed respectively on confronting portions of the projecting portion 94b of the switching member 94 and the projecting portion 62b of the control shaft 62a. These inclined surfaces 94c, 62c are formed into smooth planes so as to slide on each other when the projecting portions 94c, 62c are brought into abutment with each other.

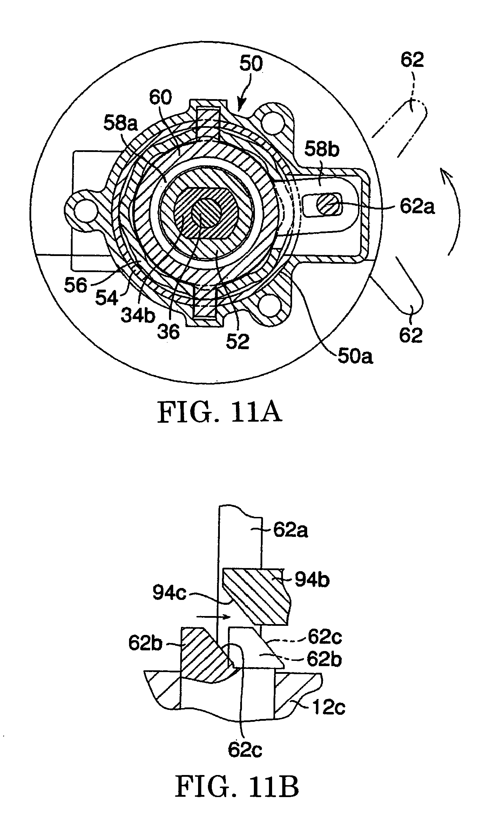

Because of this, as is shown in Fig. 11B, when the switching lever 62 is operated, the inclined surface 62c of the projecting portion 62b provided on the control shaft 62a moves towards and away from the inclined surface 94c of the projecting portion 94b of the switching member 94 in a direction around the axis of the control shaft 62a as the control shaft 62a rotates. In addition, in Fig. 11B, the projecting portion 62b shown by a solid line results when the switching lever 62 is in the ON position, whereas the projecting portion 62b shown by a broken line results when the switching lever 62 is in the OFF position. On the other hand, as is shown in Figs. 9B, 9D, 10B, 10D, when the bail 14d is switched to the line winding position (refer to Fig. 9B) and the line releasing position (refer to Fig. 10B) by moving the restoring movable member 82, the inclined surface 94c of the projecting portion 94b of the switching member 94 moves towards and away from the inclined surface 62c of the projecting portion 62b provided on the control shaft 62a along the axial direction of the control shaft 62a.

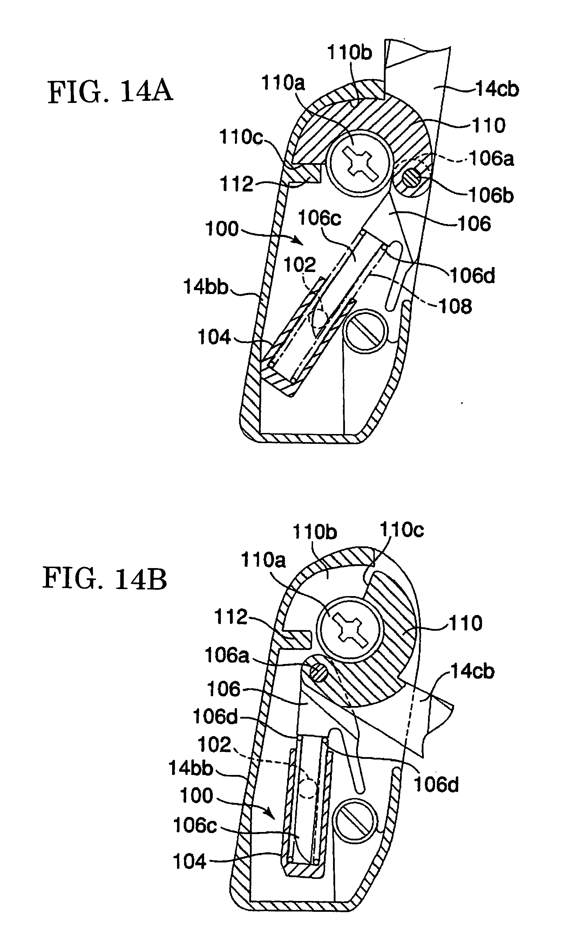

The function of the fishing spinning reel 10 that has been described heretofore will be described below.
Normally, in releasing the line (casting the jig and the like), the switching fever 62 is disposed in the ON position, which is the anti-reverse state, the first and second bail support members 14ca, 14cb (the bail 14d) are operated to reverse from the line winding position (refer to Figs. 9A to 9D, 14A) to the line releasing position (refer to Figs. 10B to 10D, 14B) by the flipping mechanism 100, the line is dislocated from the line guide portion 14e, and the rod is forcibly swung down from its upward casting position.

When the bail 14d is rotated from the line winding position shown in Fig. 9B to the line releasing position shown in Fig. 10B by the flipping mechanism 100, the restoring movable member 82 is pressed downwards by the upper end portion 14n of the elongated hole 14g which is brought into abutment with the upper end side 82a and is moved to a position shown in Fig. 10B. By this action, the lower end side 82b enters a position where the boss 82b can be brought into abutment with the restricting portion 84a of the restoring thrust contact portion 84. Because of this, the lower end side boss 82b of the restoring movable member 82 is moved from a state as resulting when in the line winding position shown in Fig. 9C in which the boss 82b is spaced apart from the restricting portion 84a of the restoring thrust contact portion 84 and is disposed in a state as resulting when in the line releasing position shown in Fig. 10C in which the boss 82b can be brought into abutment with the restricting portion 84a of the restoring thrust contact portion 84.

In this way, when the lower end side boss 82b of the restoring movable member 82 is press downwards from the state shown in Fig. 9B to the state shown in Fig. 10B, the flange portion 94a of the switching member 94 is pressed downwards from a position shown in Fig. 9A to a position shown in Fig. 10A by the boss 82b.

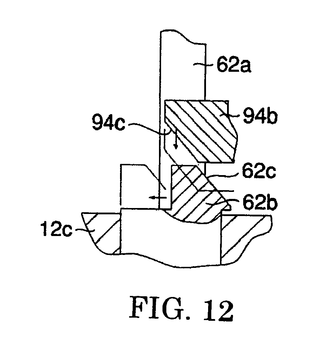

As this occurs, although the inclined surface 94c of the projecting portion 94b of the switching member 94 is lowered as the flange portion 94a of the switching member 94 is lowered, the inclined surface 94c is kept spaced apart from the inclined surface 62c of the projecting portion 62b of the control shaft 62a so as to be in a non-contact state as is shown in Fig. 10D, whereby the reversal to the line releasing position is permitted. In addition, during the series of actions taking place before releasing the line in actual fishing, when the projecting portion 62b of the control shaft 62a lies in a position shown by a solid line in Fig. 12 (a position where the switching lever 62 is OFF), in the event that the bail support members 14ca, 14cb are reversed from the line winding position to the line releasing position, the inclined surface 62c of the projecting portion 62b provided on the control shaft 62a is pressed against by the inclined surface 94c of the projecting portion 94b of the switching member 94. Because of this, the control shaft 62a receives a force acting in the direction around the axis thereof as a result of a converting action by the inclined surfaces 94c, 62c, whereby the projecting portion 62b of the control shaft 62a is moved to a position shown by a broken line in Fig. 12 (a position where the switching lever 62 is ON). Namely, when the bail 14d is erected to the line releasing position, the switching lever 62 is forcibly switched to the ON position.

On the other hand, when the bail 14d is erected in such a state that the switching lever 62 is switched to the ON position, although the projecting portion 94b of the switching member 94 is lowered along the outside of the support portion 50 of the reel main body 12, since the projecting portion 62b of the control shaft 62a is disposed in the position where the projecting portion 62b is spaced apart from the projecting portion 94b, there occurs no such situation that the inclined surface 94c of the projecting portion 94b of the switching member 94 and the inclined surface 62c of the projecting portion 62b of the control shaft 62a are brought into abutment with each other. Because of this, when the switching lever 62 is in the ON position, the switching lever 62 is brought into engagement with the automatic switching mechanism 90 in no case, whereby a reversing operation to the line releasing position is enabled.

In addition, in the event that the bail 14d is erected also when the switching lever 61 is in the ON position, the rotor 14 is prevented from rotating forwards by the boss 82b of the restoring movable member 82.
Namely, in casting the jig and its related parts by erecting the bail 14d, the rotor 14 is made not to rotate by the reverse rotation preventive action by the rolling type one-way clutch 46 and the forward rotation preventive action by the reversing mechanism 80.

Then, since the rotation of the rotor 14 is prevented when swinging down the rod from its upper casting position, an abrupt and forcible reverse rotation of the rotor 14 is prevented which would otherwise take place due to the momentum produced when the rod is swung down or effects imposed by the position of the dandle 24, whereby the application of a large magnitude of force to the rotor 14, the reversing mechanism 80 of the reel main body 12 and the arm portion 14b is prevented.

In addition, when the bail 14d stays in the line winding position as is shown in Fig. 9B with the switching lever 62 lying in the OFF position, even though the switching leer 62 is switched to the ON position, as is shown in Fig. 11B, the inclined surfaces 94c, 62c are only allowed to approach each other in the direction around the axis of the control shaft 62a, and there occurs no such case that the inclined surface 94c of the projecting portion 94b of the switching member 94 and the inclined surface 62c of the projecting portion 62 of the control shaft 62a are brought into abutment with each other.

Then, when the bail 14d is rotated to the line winding position as is shown in Fig. 9B, as is shown by solid lines in Figs. 9A to 9C, the lower end side boss 82b of the restoring movable member 82 is moved to a position where the boss 82b does not interfere with the restoring thrust contact portion 84. Consequently, the rotor 14 is put in a state where it can rotate freely in the forward rotational direction.

As has been described heretofore, according to the second embodiment, the following will result.
when the bail 14d is reversed from the line winding position to the line releasing position, the switching lever 62 which is in the OFF position or in the rotation enabling state can forcibly be switched to the ON position. Because of this, should a line releasing operation be attempted erroneously in such a state that the switching lever 62 is in the OFF position, such an attempt can be prevented in an ensured fashion. Consequently, for example, a high-speed rotation of the rotor 14 or an application of a large magnitude of force to the arm portion 14b can be prevented which would otherwise take place when releasing the line. Because of this, the life of the reel 10 can be extended long.

Note that in the second embodiment, while the single coil spring (the coil spring having a large diameter) 92 is described as being provided concentrically about the spool shaft 36, a plurality of coil springs (coil springs having a small diameter) may preferably be provided at appropriate intervals in the position where the switching member 94 is disposed. In addition, provided that the switching member 94 can be biased upwards as viewed in Figs. 9A and 10A, the biasing means is not limited to the coil spring 92, and hence, various types of springs or elastic elements can be used.

In addition, in the second embodiment, while the switching member 94 has been described as being formed into the substantially annular (the substantially tubular shape), the switching member 94 does not have to be formed into the annular shape, and hence, a switching means may preferably be provided in a range where the boss 82b of the restoring movable member 82 can be pressed against thereby.

While the invention has been described specifically based on the second embodiment by reference to the accompanying drawings, the invention is not limited to the second embodiment, the reversing mechanism 80, the anti-reverse mechanism 46, the automatic switching mechanism 90, the flipping mechanism 100 and the like may be modified variously without departing form the spirit and scope of the invention, and all those embodiments are understood to be contained in the invention.

## Claims

1. A fishing spinning reel comprising:
a reel main body;
a handle rotatably provided on the reel main body;
a rotor which is rotated by operating the handle and includes an arm portion;
a support member which is supported by the arm portion in such a manner as to rotate reversibly between a line winding position and a line releasing position and includes a line guide portion;
an anti-reverse mechanism which includes a switching lever which can be switched between an anti-reverse state in which the rotor is prevented from rotating backwards, and a rotation enabling state in which the rotor is enabled to rotate forwards and backwards; and
a controller which controls the support member in such a manner that reversal of the support member from the line winding position to the line releasing position is permitted when the anti-reverse mechanism is in the anti-reverse state and the reversal of the support member from the line winding position to the line releasing position is prohibited when the anti-reverse mechanism is in the rotation enabling state.

2. The fishing spinning reel according to claim 1 further comprising a rotation control mechanism for restricting the rotor from rotating in a line winding direction when the support member is in the line releasing position and permitting the rotor to rotate forwards and backwards when the support member is in the line winding position,
wherein the controller includes:
an engagement portion provided on the reel main body; and
a preventive member adapted to be brought into engagement with the engagement portion so as to move depending on switching of the anti-reverse mechanism between the rotation enabling state and the anti-reverse state, so that when the anti-reverse mechanism is in the rotation enabling state or is switched from the anti-reverse state to the rotation enabling state, the operation of the rotation control mechanism is controlled by the preventive member which is in engagement with the engagement portion.

3. A fishing spinning reel comprising:
a reel main body;
a handle rotatably provided on the reel main body;
a rotor which is rotated by operating the handle and includes an arm portion;
a support member which is supported by the arm portion in such a manner as to rotate reversibly between a line winding position and a line releasing position and includes a line guide portion;
an anti-reverse mechanism which includes a switching lever which can be switched between an anti-reverse state in which the rotor is prevented from rotating backwards, and a rotation enabling state in which the rotor is enabled to rotate forwards and backwards; and
an automatic switching device for forcibly switching the anti-reverse mechanism to the anti-reverse state when the support member is reversed from the line winding position to the line releasing position with the anti-reverse mechanism lying in the rotation enabling state.

4. The fishing spinning reel according to claim 1, wherein
the automatic switching device includes:
a first movable member which moves as the anti-reverse mechanism is switched between the anti-reverse state and the rotation enabling state; and
a second movable member which moves towards and away from the first movable member as the support member is switched between the line winding position and the line releasing position,
when the support member is reversed from the line winding position to the line releasing position with the anti-reverse mechanism lying in the rotation enabling state, the second movable member is brought into abutment with the first movable member so as to move the first movable member, so that the anti-reverse mechanism is switched from the rotation enable state to the anti-reverse stage,
wherein when the support member is switched to the line releasing position with the anti-reverse mechanism lying in the anti-reverse state, the first and second movable members are in a non-engagement state, so as to hold the anti-reverse state.
